# EUROPEAN PATENT APPLICATION

(11) **EP 1 882 609 A1**
(43) Date of publication of application: **30.01.2008**
(21) Application number: 06425529.2
(22) Date of filing: 27.07.2006
(51) Int. Cl.: B60N 2/30, B60N 2/22, B60N 2/12

(54) **Seat assembly provided with an articulated-quadrilateral supporting device for a motor vehicle**

(71) Applicant: C.R.F. SOCIETA' CONSORTILE PER AZIONI, 10043 Orbassano (Torino) (IT)
(72) Inventor: Demontis, Salvatore, 10043 Orbassano (IT); Masoero, Giorgio, 10043 Orbassano (IT); Storgato, Angelo, 10043 Orbassano (IT)
(74) Representative: Cerbaro, Elena

(57) **Abstract**

A seat assembly (1) for a motor vehicle is provided with a sitting surface (7) and a backrest (8), which is able to rotate about a horizontal axis (11), orthogonal to a longitudinal direction (12) of advance of the motor vehicle, between a raised position and a position where it is folded down against the sitting surface (7); the seat assembly (1) is moreover provided with an articulated quadrilateral (20) for rendering the sitting surface (7) movable between a first position, in which it defines a seat for a passenger, and a second position, which is longitudinally advanced with respect the first position, for enabling the rear-seat passengers to get into out of the vehicle; the articulated quadrilateral (20) renders the sitting surface (7) movable also in a direction opposite to the second position, from the first position to a third position, in which the sitting surface (7) is lower than in the first position.

## Description

The present invention relates to a seat assembly provided with an articulated-quadrilateral supporting device for a motor vehicle.

As is known, in motor vehicles without rear doors, there is the need to make it easier for rear-seat passengers to get into and out of the vehicle and, hence, the need to have front seats that are able to slide forwards and/or be tilted forwards to leave ample space for access between the front seats and the rear uprights of the side doors.

In order to meet said need, it is known to connect the sitting surfaces of the front seats to the floor or bottom panel of the motor vehicle by means of an articulated-quadrilateral supporting device, which enables a displacement from a first position, in which the seat is in a normal condition when the vehicle is travelling and defines a place for a driver or a passenger sitting in the front seat, to a second position, in which the seat is located forwards to enable access of passengers to the rear seats.

When the seats of the known type described above are in their normal condition when the vehicle is travelling and are not occupied by passengers, there exists the need to be able to fold the backrest of the seat forwards so that it lies down flat against the sitting surface. In this way, the rear surface of the backrest can provide part of an additional loading surface or else a substantially horizontal supporting surface to enable the driver or other passengers to lay down thereon in a stable position a wide range of objects, such as, for example, plastic cups, portable computers, etc.

In particular, there exists the need to reduce as much as possible the encumbrance when the backrest is fold down forwards so that it lies on the sitting surface.

Preferably, the additional need exists to be able to displace the seat into the second position with a relatively wide range of travel in order to improve the convenience of access to the rear seats through the front doors of the vehicle.

The aim of the present invention is to provide a seat assembly equipped with an articulated-quadrilateral supporting device for a motor vehicle that will enable the requirements set forth above to be met in a simple and economically advantageous way.

According to the present invention a seat assembly for a motor vehicle is provided, which comprises:
- a sitting surface;
- a backrest that can turn about a horizontal axis, orthogonal to a longitudinal direction of advance of said motor vehicle, between a raised position and a position where it is folded down; said backrest having a rear surface, which, in said position where the backrest is folded down, is substantially horizontal;
- a supporting and movement assembly coupled to said sitting surface for connecting said sitting surface to a floor panel of said motor vehicle, the supporting and movement assembly comprising an articulated quadrilateral for rendering said sitting surface movable between a first position, in which it defines a seat for a passenger, and a second position, which is longitudinally advanced with respect to said first position;
said seat assembly being characterized in that said articulated quadrilateral renders said sitting surface movable in a direction opposite to said second position, from said first position to a third position, in which the sitting surface is lower than in said first position.

For a better understanding of the present invention, a preferred embodiment is now described purely by way of nonlimiting example, with reference to the attached plate of drawings, wherein:
- Figure 1 is a side view of a preferred embodiment of the seat assembly provided with an articulated-quadrilateral supporting device for a motor vehicle, according to the present invention; and
- Figures 2 and 3 are similar to Figure 1 and show the seat assembly of Figure 1 in different functional positions.

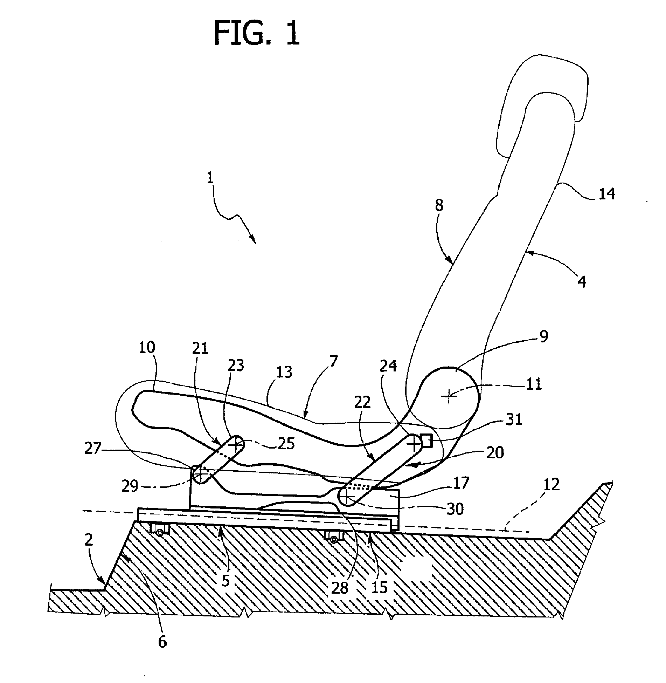

In Figure 1, the reference number 1 designates a seat assembly, which is provided in the passenger compartment 2 of a motor vehicle. The seat assembly 1 comprises a seat 4 and a supporting and movement assembly 5, which connects the seat 4 to a floor panel 6, which defines the bottom of the passenger compartment 2.

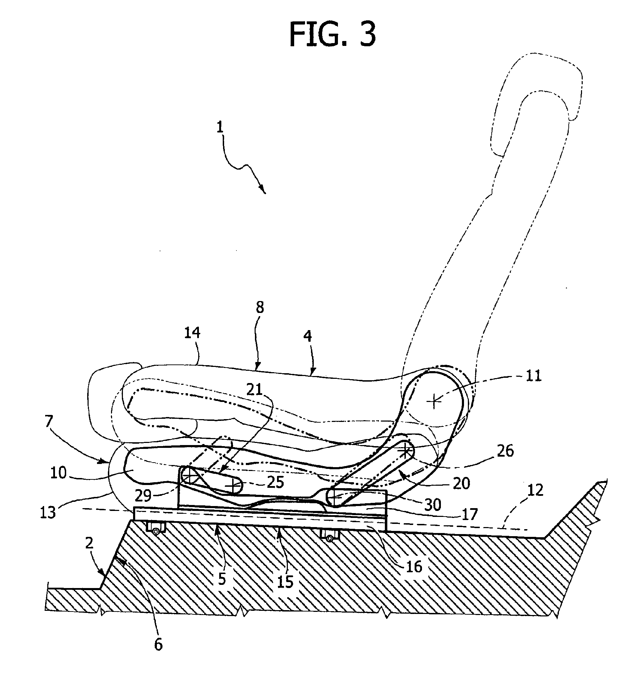

The seat 4 comprises a sitting surface 7 and a backrest 8, which is attached to two brackets defining the rear terminal portion 9 of a frame 10 of the sitting surface 7 and is able to turn about a horizontal axis 11 (Figure 1) orthogonal to a longitudinal direction 12 of advance of the motor vehicle, between a substantially vertical raised position (Figure 1) and a position where it is folded down so that it remains substantially horizontal (Figure 3).

Incidentally, it is pointed out that hereinafter the terms "front", "rear", "forwards", "backwards", "top", "bottom", etc. are used with reference to the direction of advance of etc. are used with reference to the direction of advance of the motor vehicle.

In the position indicated above where the backrest 8 is folded down, said backrest 8 is set resting against a padding 13, which covers at the top the frame 10, and has a rear surface 14 that extends in a substantially horizontal direction to define part of an additional loading surface and/or a resting surface. In this way, the surface 14 enables the driver or the passengers of the motor vehicle to lay, in a stable position, a wide range of objects, such as for example plastic cups, portable computers, light luggage, etc.

The assembly 5, instead, comprises a guide-and-slide device 15, which comprises, in turn, two longitudinal guide rails 16, fixed to the floor panel 6 in positions set, in a transverse direction, at a distance between one another, and a slide 17 coupled to the rails 16 in such a way as to be able to slide longitudinally. The slide 17 can be clamped by a releasable retention device, of a type in itself known and not shown, in a position of use that is fixed and/or can be adjusted with respect to the rails 16 and that is such as to satisfy the ergonomic requirements of the user.

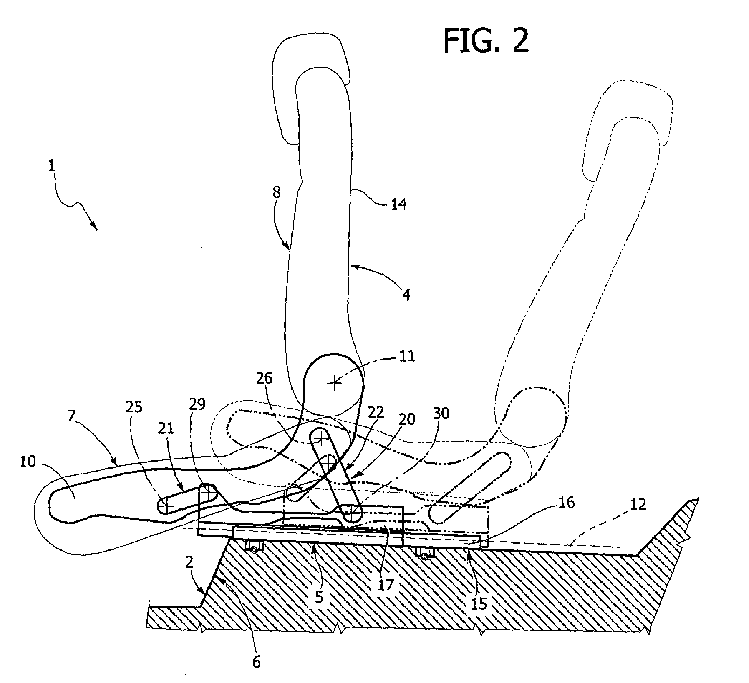

Once said retention device is released, the slide 17 can be slid along the rails 16 by pushing the seat 4 manually or else via a motor-driven device. In a preferred embodiment, when the rear-seat passengers need to get into or out of the vehicle through the front doors (not shown), the slide 17 is brought into an advanced end-of-travel position (Figure 2).

With reference to the attached figures, the assembly 5 further comprises an articulated quadrilateral 20 made up of at least one front connecting rod 21 and at least one rear connecting rod 22.

The top ends of the connecting rods 21, 22 are designated by the reference numbers 23 and 24, respectively, and are hinged to the frame 10 about respective axes 25, 26 parallel to the axis 11, whilst the bottom ends of the connecting rods 21, 22 are designated by the reference numbers 27 and 28, respectively, and are hinged to the slide 17 about respective axes 29, 30, which are also parallel to the axis 11.

The articulated quadrilateral 20 renders the seat 4 movable with respect the slide 17 from a first position, in which the seat 4 is in a normal condition when the vehicle is travelling and defines a seat for a passenger in optimal ergonomic conditions with respect to the other components of the passenger compartment 2, to a second position, in which the sitting surface 7 is longitudinally advanced with respect the first position to enable the rear-seat passengers to get in and out through the front doors, preferably in combination with advance of the slide 17.

In addition, thanks to the articulated quadrilateral 20, the seat 4 is movable with respect to the slide 17 also in an opposite direction, i.e., backwards, from the first position to a third position, in which the sitting surface 7 is lower than the first position. Preferably, the sitting surface 7 has a bottom cavity (not shown), which, in the aforesaid third position, houses the connecting rods 21, 22 completely and the slide 17 partially.

The length of the connecting rod 22 is preferably greater than that of the connecting rod 21 (by the term "length" is understood the distance between the axes 25, 29 and between the axes 26, 30) to obtain also a rotation of the sitting surface 7, in addition to a translation, during the displacement away from and towards the first position. In particular, in the second position, the seat 4 is partially tilted forwards with respect the first position to optimize the space necessary for the rear-seat passengers to get in and out of the vehicle.

The seat 4 remains released in the first position with respect to the slide 17 under the action of a releasable retention device 31 (shown as a whole in Figure 1), which preferably is carried by the frame 10 and acts on the connecting rod 22. Release of the device 31 is obtained by a lever transmission (not shown), operated by a manual control (not shown) set in sight on a side of the backrest 8. Alternatively, the device 31 is released by a motor-driven device (not shown), activated by a manual control provided in the passenger compartment 2.

Once the device 31 has been released, the movements away from and towards the first position are caused by manual thrusts and/or by the weight of the seat 4, and are possibly dampened in a way not described in detail, for example via springs (not shown), which can possibly facilitate also return of the seat 4 into/from the first position.

Alternatively, the movements of the seat 4 away from and towards the first position are motor-driven.

When the seat 4 reaches the third position, it is set resting against the slide 17 and/or against the rails 16 and/or the floor panel 6. The connecting rod 21 is rotated backwards about the axis 29 (in the clockwise direction, as viewed in Figure 3) and has exceeded a rear dead centre, defined by the alignment of the axis 25 with the axis 29 in the direction 12 so that any possible inertial action in the direction 12, due to sharp accelerations, braking or else impact of the motor vehicle, do not cause the sitting surface 7 to tilt over forwards towards the first position, but tend to cause rotation of the connecting rod 21 downwards and, hence, to push the sitting surface 7 further against the floor panel 6.

In a normal condition when the vehicle is travelling and when the seat is not occupied by a passenger, the backrest 8 can be tilted forwards in a position where it is folded down, to have the surface 14 available as substantially horizontal resting surface or loading surface. Using the third position of the seat 4 for folding down the backrest 8 (Figure 3), it is possible to reduce the encumbrance in the vertical direction of the seat assembly 1 with respect to the floor panel 6 in a situation of so-called optimal "packing", minimizing the height of the loading threshold defined by the surface 14.

According to a preferred embodiment, the rotation of the backrest 8 in a position where it is folded down occurs simultaneously with the displacement backwards of the seat 4 from the first position to the third position, in response to a single control device and/or to a single common actuation device (not shown) or else in response to various actuation devices synchronized with one another (not shown either).

The operation and the advantages of the seat assembly 1 are evident from the characteristics described above. In particular, the articulated quadrilateral 20 enables both advance of the seat 4 into an advanced position for enabling the rear-seat passengers to get into or out of the vehicle through the front doors and "packing" of the seat assembly 1 when the backrest 8 is folded down on the sitting surface 7.

In addition, the position of the connecting rod 21, when the seat 4 is in the third position, enables the seat 4 to be kept stationary even in the presence of forces of inertia in the direction 12.

Furthermore, the combination of the slide 17 with the quadrilateral 20 enables an ample advance of the seat 4 with respect the first position to enable the rear-seat passengers to get into or get out of the vehicle conveniently through the front doors.

Finally, it is clear that modifications and variations can be made to the assembly 1 described and shown herein, without thereby departing from the sphere of protection of the present invention, as defined in the annexed claims.

In particular, the quadrilateral 20 could be connected to a fixed supporting base or directly to the floor panel 6, without the device 15. The connecting rods 21, 22 could be provided in a greater number, and/or could have lengths different from the ones shown, and/or have an inclination with respect to one another different from the one shown.

In addition, the device 31 could be carried by the slide 17 and/or act on the connecting rod 21.

Furthermore, the assembly 1 could be provided for a second row of seats, when the motor vehicle also has a third row of rear seats.

Finally, the device 31 could comprise a first portion, which prevents rotation of the seat 4 towards the second position, and a second portion, which prevents rotation of the seat 4 towards the third position and can be released in an independent way from the first portion. In this case, release of the backrest 8 from its substantially vertical raised position and release of the second portion of the device 31 could occur simultaneously as a result of a single control device and/or a single actuation device in common (not shown).

## Claims

1. A seat assembly (1) for a motor vehicle comprising:
- a sitting surface (7);
- a backrest (8) that can rotate about a horizontal axis (11), orthogonal to a longitudinal direction (12) of advance of said motor vehicle, between a raised position and a position where it is folded down; said backrest (8) having a rear surface (14) that, in said position where it is folded down, is substantially horizontal; and
- a supporting and movement assembly (5) coupled to said sitting surface (7) for connecting said sitting surface (7) to a floor panel (6) of said motor vehicle; the supporting and movement assembly (5) comprising an articulated quadrilateral (20) for rendering said sitting surface (7) movable between a first position, in which it defines a sitting place for a passenger, and a second position, which is longitudinally advanced with respect to said first position;
said seat assembly being **characterized in that** said articulated quadrilateral (20) renders said sitting surface (7) movable in a direction opposite to said second position, from said first position to a third position, in which the sitting surface (7) is lower than in said first position.

2. The seat assembly according to Claim 1, **characterized in that** said articulated quadrilateral (20) is made up of at least one front connecting rod (21) and at least one rear connecting rod (22); said connecting rods (21, 22) comprising respective first ends (23, 24) hinged to a frame (10) of said sitting surface (7) about respective first axes (25, 26) parallel to said horizontal axis (11), and respective second ends (27, 28) hinged to a supporting base (17) about respective second axes (29, 30) which are also parallel to said horizontal axis (11).

3. The seat assembly according to Claim 2, **characterized in that** the length of said connecting rods (21, 22) differ from one another.

4. The seat assembly according to Claim 2 or Claim 3, **characterized in that**, when said sitting surface (7) has reached said third position, one of said connecting rods (21, 22) has exceeded a rear dead centre defined by the alignment of the corresponding first axis (25) with the corresponding second axis (29) along said longitudinal direction of advance (12).

5. The seat assembly according to any one of the preceding claims, **characterized in that** said supporting and movement assembly (5) further comprises a slide-and-guide device (15) comprising a slide (17) that is able to slide longitudinally; said slide (17) being slid into an advanced end-of-travel position when said sitting surface (7) is displaced from the first position to the second position.

6. The seat assembly according to Claims 2 and 5, **characterized in that** said supporting base is defined by said slide (17).
